# EUROPÄISCHE PATENTSCHRIFT

(11) **EP 0 838 427 B1**
(45) Veröffentlichungstag und Bekanntmachung des Hinweises auf die Patenterteilung: **22.12.1999**
(21) Anmeldenummer: 97250296.7
(22) Anmeldetag: 02.10.1997
(51) Int. Cl.: B66C 9/08

(54) **Laufrad für auf Schienen verfahrbare Fahreinheiten, insbesondere für Laufkrane**
Wheel for movable driving units on rails, particularly for travelling cranes
Roue pour unités d'entraînement mobiles sur des rails, en particulier pour ponts-roulants

(30) Priorität: 22.10.1996 DE 19645147
(43) Veröffentlichungstag der Anmeldung: 29.04.1998
(73) Patentinhaber: MANNESMANN Aktiengesellschaft, 40213 Düsseldorf (DE)
(72) Erfinder: Becker, Eberhard, Dipl.-Ing. Wirtsch.-Ing., 58093 Hagen (DE); Duhme, Andreas, Dipl.-Ing., 58452 Witten (DE); Gievers, Winfried, Dipl.-Ing., 58300 Wetter (DE); Grassmann, Ingo, 58300 Wetter (DE); Jansen, Gregor, Dipl.-Ing., 46244 Bottrop (DE); Knaack, Karl, 44227 Dortmund (DE); Osthoff, Hans-Hermann, Ing. (grad), 58300 Wetter (DE); Schweflinghaus, Thomas, Dipl.-Ing., 42119 Wuppertal (DE); Staggl, Roland, Ing. (grad), 58300 Wetter (DE); Stöber, Manfred, Dipl.-Ing., 58453 Witten (DE); Gersemsky, Udo Dipl.-Ing., D-58313 Herdecke (DE); Hildebrandt, Frank, D-58300 Wetter (DE); Hoffmann, Klaus Peter Dipl.-Ing., D-58239 Schwerte (DE)
(74) Vertreter: Meissner, Peter E., Dipl.-Ing.

(56) Entgegenhaltungen:
- DE-A- 2 034 107
- DE-A- 4 021 054
- DE-U- 8 313 096
- DATABASE WPI Week 9129 4.September 1991 Derwent Publications Ltd., London, GB; AN 91-214306 XP002053428 & SU 1 606 434 A (KIEV POLY) , 15.November 1990
- DATABASE WPI Week 7917 8.Juni 1979 Derwent Publications Ltd., London, GB; AN D7592 XP002053429 & SU 610 769 A (KONONOV YA M) , 12.Mai 1978
- DATABASE WPI Week 8738 30.September 1987 Derwent Publications Ltd., London, GB; AN 87-270337 XP002053430 & SU 1 289 800 A (KIEV POLY) , 15.Februar 1987

## Beschreibung

Die Erfindung betrifft ein Laufrad für auf Schienen verfahrbare Fahreinheiten, insbesondere für Laufkrane, gemäß dem Oberbegriff des Anspruchs 1.

Aus dem deutschen Gebrauchsmuster DE 83 13 096 U1 ist ein angetriebenes Laufrad für ein auf Schienen verfahrbares Fahrzeug, insbesondere einen Kran, bekannt, das einen Laufring (Bandage) aufweist, in dessen zentrischer Öffnung eine mit einer Innenverzahnung versehene Radnabe eingeschrumpft ist; dabei ist die Innenverzahnung symmetrisch zur vertikalen Mittelebene des Laufrades angeordnet. Das Laufrad ist über Wälzlager auf der rohrförmig ausgebildeten Achse des Laufrades abgestützt. Die Achse wiederum ist mit der Stützkonstruktion des Laufrades drehfest verbunden. Eine Antriebswelle eines Getriebes ragt in die Nabe hinein und ist zur Übertragung des Drehmomentes kraftschlüssig mit dieser verbunden. Hierbei erfolgt die Verbindung über mehrere zusammen wirkende Zahnräder, die ein innerhalb der Nabe angeordnetes Planetengetriebe bilden.

Nachteilig ist bei diesem Laufrad, daß Drehmomentspitzen, wie sie insbesondere immer beim Richtungswechsel des Laufrades auftreten, direkt ins Getriebe geleitet werden, was regelmäßig zu einer Verringerung der Lebensdauer des Getriebes führt. Bei extremer Überlastung kann es außerdem zu einer Zerstörung des Getriebes kommen. Ferner weist dieses Laufrad eine Nabe auf, die aufwendig herzustellen ist.

Um zu verhindern, daß Biegemomente und Querkräfte in die Antriebswelle eingeleitet werden, ist es beispielsweise aus der DE 40 21 054 C2 bekannt, bei einer nicht gattungsgemäßen Drehmomentstütze vor dem Getriebe ein elastisches Element zwischen Getriebe und Anschlußstahlwand (Gehäuse) anzuordnen. Das elastische Element ist dabei als mit einer Innenverzahnung versehener Außenring ausgebildet, der aus einem unter Spannung verformbaren Kunststoff hergestellt ist.

Ferner ist aus der DE-OS 2 034 107 ein angetriebenes Kranlaufrad bekannt, das vollständig aus einem Kunststoff besteht und über eine Innenverzahnung mit der Verzahnung einer Antriebswelle im Eingriff steht. Derartige Kranlaufräder können allerdings nur bei relativ geringen Traglasten eingesetzt werden, da die Festigkeit von Kunststoff geringer als die von Stahl oder Gußeisen ist.

Es ist die Aufgabe der vorliegenden Erfindung, ein Laufrad für auf Schienen verfahrbare Einheiten, insbesondere für Laufkräne, anzugeben, das einerseits mit schweren Lasten belastbar ist und andererseits auftretende Drehmomentspitzen wirksam vor dem Getriebe und der Antriebswelle abfängt.

Die Lösung dieser Aufgabe ist erfindungsgemäß gekennzeichnet durch die im Patentanspruch 1 angegebenen Merkmale. Durch die kennzeichnenden Merkmale der Unteransprüche 2 bis 14 ist das Laufrad in vorteilhafterweise weiter ausgestaltet.

Die Erfindung sieht vor, daß die Nabe werkstoffmäßig derart ausgebildet ist, daß eine spielfreie, drehmomentübertragende Verbindung zwischen einem verschleißfesten Laufring und einer elastisch dämpfenden Nabe gebildet ist.

Vorteilhafterweise ist die Nabe werkstoffmäßig derart ausgebildet, daß der Laufring und die Antriebswelle bei Drehmomenteinwirkung nach Art eines Torsionsstabes innerhalb eines begrenzten Winkelbereiches relativ gegeneinander verdrehbar sind. Eine derartige Nabe weist darüberhinaus ein hohes Dämpfungsdekrement auf, welches auftretende Drehmomentspitzen wirksam abbaut.

Der Kern der Erfindung besteht darin, die Nabe durch Verwendung bekannter Werkstoffe so herzustellen, daß bei Drehmomentspitzen eine elastische Verdrehung zwischen Laufring und Antriebswelle nach Art eines Torsionsstabes realisiert wird. Dabei ist die elastische Verdrehung im Gegensatz zu einer Rutschkupplung nur innerhalb eines begrenzten Winkelbereiches möglich. Außerhalb dieses Winkelbereiches, also oberhalb eines vom Werkstoff und von der Konstruktion abhängigen Grenzwinkels wirkt die Nabe als starre Verbindung zwischen Laufring und Antriebswelle. Das Laufrad wird hierbei so betrieben, daß der Winkelbereich bei Nennlast noch nicht überschritten wird.

Die Nabe eines derartigen Laufrades ist leicht herstellbar, so daß mit geringem Aufwand eine große Vielfalt an Laufrädern wie bei einem Baukastensystem realisierbar ist.

Eine stabile Verbindung wird dadurch erzielt, daß die Verbindung im Laufring und in der Nabe form- und/oder kraftschlüssig ausgebildet ist.

Mit der Erfindung wird vorgeschlagen, daß die Verdrehbarkeit des Laufringes gegenüber der Antriebswelle nach Art eines Torsionsstabes dadurch realisiert wird, daß die Nabe werkstoffmäßig zumindest teilweise aus einem elastischen Kunststoff gebildet ist. Der elastische Kunststoff sorgt hierbei für die elastische Verdrehbarkeit von Laufring und Antriebswelle innerhalb eines begrenzten Bereiches.

In Ausgestaltung der Erfindung wird vorgeschlagen, daß der Kunststoff im Spritzgußverfahren gießbar ist. Damit ist die elastische Eigenschaften aufweisende Nabe leicht herstellbar, so daß verschiedene Laufringe in Anpassung an verschiedenste Belastungen und Anforderungen mit geringem Aufwand mit entsprechend ausgebildeten Naben versehen werden können, ohne daß diese Vielzahl an unterschiedlichen Naben auf Lager gehalten werden müssen.

Weiter wird vorgeschlagen, daß die Nabe werkstoffmäßig zumindest teilweise aus einer elastischen Leichtmetallegierung gebildet ist.

Eine spezielle Ausgestaltung der Erfindung sieht vor, daß der äußere Randbereich der Nabe aus dem Kunststoff gebildet ist. Die Nabe weist in diesem Falle beispielsweise einen Kunststoffaußenring auf, dessen Dicke jeweils nach Erfordernis kleiner oder größer ausgebildet sein kann, je nach gewünschter elastischer Pufferwirkung. Der innere Randbereich läßt sich dann bezüglich Festigkeit usw. an andere Anforderungen gezielt anpassen.

Zweckmäßigerweise umfaßt der äußere Randbereich der Nabe zumindest 1/3 des Nabendurchmessers, da ansonsten die Elastizität der Nabe regelmäßig nicht ausreichend ist.

Um eine besonders spielfreie Drehmomentübertragung zwischen Laufring und Nabe zu gewährleisten, wird vorgeschlagen, daß die Öffnung des Laufringes ein gleichseitiges sphärisches Dreieck als Querschnitt aufweist, in die die mit einem Wellenschaft mit korrespondierendem Querschnitt ausgebildete Nabe spielfrei einführbar ist. Ein derartiger Querschnitt ist zudem relativ leicht herzustellen.

Zweckmäßigerweise ist die Nabe so ausgestaltet, daß in der Nabe eine zentrisch angeordnete Durchgangsöffnung vorgesehen ist, in die ein korrespondierend geformter Wellenstumpf der Antriebswelle form- und/oder kraftschlüssig spielfrei einpaßbar ist.

Sehr gute Drehmomentübertragungseigenschaften werden dadurch erzielt, daß die Durchgangsöffnung ein gleichseitiges sphärisches Dreieck oder eine Vielkeilverzahnung als Querschnitt aufweist. Auch hierbei gilt wiederum, daß dieser Querschnitt relativ leicht herstellbar ist.

Um ein Laufrad zu erhalten, mit dem auch sehr schwere Lasten verfahrbar sind, wird vorgeschlagen, daß der Laufring aus verschleißfestem Gußeisen oder aus Stahl hergestellt ist.

Es wird weiter vorgeschlagen, daß bei Auftreten sehr hoher Drehmomente der Randbereich der Durchgangsöffnung aus einem in die Nabe eingesetzten Metallring gebildet ist.

Zur einfachen Herstellung des gleichseitigen sphärischen Dreiecks als Querschnittsinnenfläche des Laufringes, wird vorgeschlagen, daß der Laufring außen beidseitig mit jeweils drei in jeweils gleichem Winkelabstand zueinander angeordneten Ausnehmungen versehen ist. Außerdem ist mittels der Ausnehmungen eine einfache Kontrolle des Laufringverschleißes möglich.

Ein Ausführungsbeispiel der Erfindung ist in der Zeichnung dargestellt und wird nachfolgend näher beschrieben. Es zeigen
- Fig. 1: eine Ansicht eines Laufrades,
- Fig. 2: einen Querschnitt gemäß der Schnittlinie A-A in Fig. 1,
- Fig. 3: eine perspektivische Ansicht einer abgewandelten Nabe und
- Fig. 4: ein Laufrad in perspektivischer Darstellung.

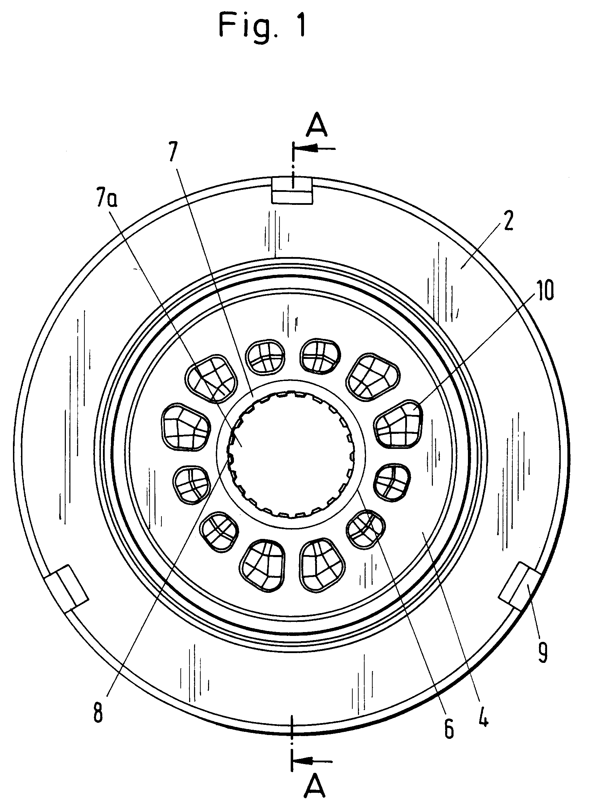

Fig. 1 zeigt eine Ansicht eines Laufrades eines auf einer Schiene verfahrbaren Laufkranes, dessen Achse beispielsweise über Wälzlager in einem Gehäuse eines Laufrades (sogenannter Laufradblock, nicht gezeigt) abgestützt ist.

Das Laufrad weist einen zwei Spurkränze 1 tragenden Laufring 2 auf, in dessen zentrischer Öffnung 3 eine Nabe 4 annähernd mittig zur vertikalen Mittelebene 5 des Laufringes 2 formschlüssig eingesetzt ist. Die Breite der Nabe 4 ist annähernd gleich der halben Breite des Laufringes 2. Der Laufring 2 ist aus verschleißfestem Gußeisen oder Stahl hergestellt, so daß er eine hohe Verschleißfestigkeit und mechanische Belastbarkeit aufweist.

Die Nabe 4 ist zweiteilig aufgebaut; sie besteht aus einem Kunststoffkörper mit einer zentrisch angeordneten Durchgangsöffnung 6, und einem Metallring 7, der in die Durchgangsöffnung 6 eingesetzt ist. Der Metallring 7 ist mit einer Innenverzahnung 8 versehen. In die Öffnung 7a des Metallrings 7 ist ein mit einer korrespondierenden Außenverzahnung versehender Wellenstumpf einer Antriebswelle formschlüssig und/oder kraftschlüssig, z.B. als Preßsitz, spielfrei einpaßbar.

Bis auf den Metallring 7 ist die Nabe 4 im Spritzgußverfahren aus einem elastischen Kunststoff hergestellt. Selbstverständlich ist es auch möglich, die Nabe 4 vollständig aus Kunststoff herzustellen; wesentlich ist hierbei aber, daß zumindest der äußere Randbereich der Nabe 4, der z.B. 1/3 des Nabendurchmessers umfaßt, aus Kunststoff gebildet ist.

Eine so ausgebildete zur Übertragung des Drehmomentes einer Antriebswelle dienende Nabe 4 gewährleistet aufgrund des verwendeten elastischen Kunststoffes, daß der Laufring 2 und die Antriebswelle nach Art eines Torsionsstabes innerhalb eines begrenzten Winkelbereiches relativ gegeneinander verdrehbar sind. Im Gegensatz zu Überlastkupplungen ist bei dem erfindungsgemäßen Laufrad wie bei einem Torsionsstab nur eine begrenzte Verdrehbarkeit vorhanden. Auf diese Weise wird eine spielfreie, drehmomentübertragende Verbindung zwischen einem verschleißfesten Laufring 2 und einer elastisch dämpfenden Nabe 4 hergestellt, wobei die Verbindung form- und/oder kraftschlüssig erfolgen kann.

Die teilweise Ausbildung der Nabe 4 aus einem Kunststoffmaterial hat aufgrund der elastischen Eigenschaften dieses Materials die Wirkung, daß Drehmomentspitzen von der Nabe 4 nahezu vollständig abgefangen und nicht ins Getriebe geleitet werden. Bei einer Überlastung des Laufrades wirkt die Nabe 4 zusätzlich als Sicherung, d. h. in einem solchen Fall kommt es nicht zu einer Zerstörung des Getriebes, sondern der Nabe 4, die in der Drehmomentübertragungskette das schwächste Glied darstellt und bei Überlastung als erstes nachgibt und plastisch deformiert wird. Die Nabe 4 kann werkstoffmäßig auch zumindest teilweise aus einer elastischen Leichtmetallegierung gebildet sein.

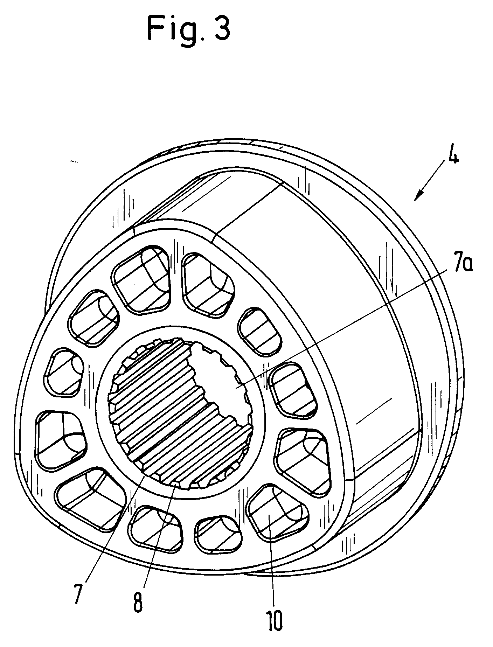

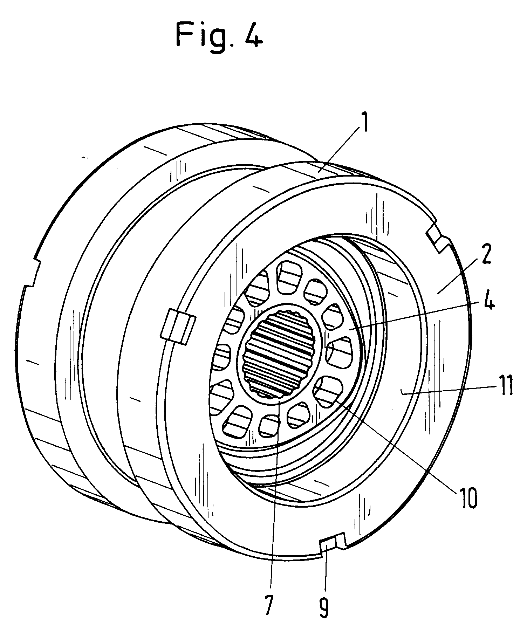

Aus Fig. 3 ist erkennbar, daß die Nabe 4 als Außenform ein gleichseitiges sphärisches Dreieck aufweist. Zur Erzielung eines guten spielfreien Formschlusses weist die Öffnung des Laufringes 2 einen korrespondierenden Querschnitt auf. Dabei zeigen die Figuren den Laufring beidseitig mit jeweils drei in jeweils gleichem Winkelabstand zueinander angeordneten Ausnehmungen 9. Diese dienen zur Erfassung des Spurkranzverschleißes des Laufrings 2; die Tiefe der Ausnehmungen 9 und damit der Verschleiß ist von der Seite gut sichtbar und auf diese weise einfach kontrollierbar Das Laufrad mit eingesetzter Nabe 4 ist in Fig. 4 in perspektivischer Darstellung gezeigt.

Abweichend vom Ausführungsbeispiel ist es selbstverständlich auch möglich, die Durchgangsöffnung 6a der Nabe 4 mit einem gleichseitigen sphärischen Dreieck oder eine Vielkeilverzahnung als Innenquerschnitt und den Wellenschaft der Antriebswelle mit einem korrespondierenden Außenquerschnitt zu versehen.

Ferner ist es bei geringeren Anforderungen an das Laufrad auch möglich, die Nabe 4 vollständig aus Kunststoff herzustellen.

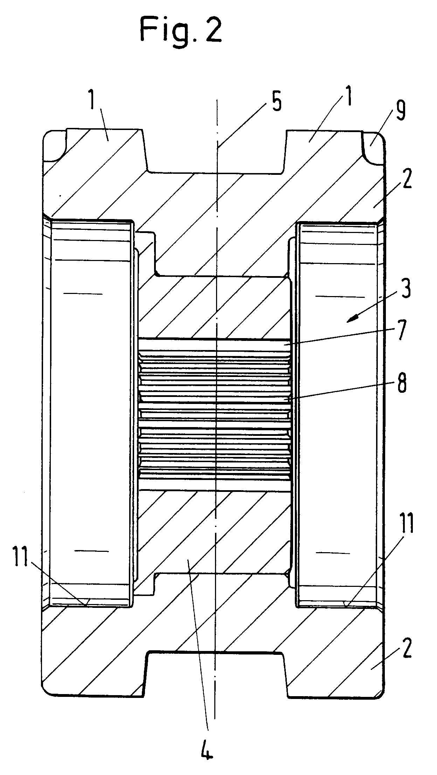

Zur Verbesserung der Spritzbarkeit weist die Nabe 4, wie aus den Figuren ersichtlich, zusätzlich Durchgangshohlräume 10 auf. Wie aus Fig. 2 und Fig. 4 ferner erkennbar ist, sind beidseitig der Mittelebene 5 im Laufring zwei Lagerringflächen 11 zur Aufnahme von Lagern vorgesehen.

### BEZUGSZEICHENLISTE:

- 1: Spurkranz
- 2: Laufring
- 3: Öffnung
- 4: Nabe
- 5: Mittelebene
- 6: Durchgangsöffnung
- 7: Metallring
- 7a: Öffnung
- 8: Innenverzahnung
- 9: Ausnehmung
- 10: Durchgangshohlraum
- 11: Lagerringflächen

## Patentansprüche

1. Laufrad für auf Schienen verfahrbare Fahreinheiten, insbesondere für Laufkrane, mit einem äußeren Laufring, in dessen zentrischer Öffnung zur Übertragung des Drehmomentes einer Antriebswelle eine Nabe (4) eingesetzt ist,
dadurch gekennzeichnet,
daß eine spielfreie, drehmomentübertragende Verbindung zwischen einem verschleißfesten Laufring ( 2 ) und einer elastisch dämpfenden Nabe ( 4 ) gebildet ist.

2. Laufrad nach Anspruch 1,
dadurch gekennzeichnet,
daß die Nabe (4 ) werkstoffmäßig derart ausgebildet ist, daß der Laufring (2) und die Antriebswelle nach Art eines Torsionsstabes innerhalb eines begrenzten Winkelbereiches bei Drehmomenteinwirkung relativ gegeneinander verdrehbar sind.

3. Laufrad nach Anspruch 1,
dadurch gekennzeichnet,
daß die Verbindung im Laufring ( 2 ) und in der Nabe ( 4 ) form- und/oder kraftschlüssig ausgebildet ist.

4. Laufrad nach einem der Ansprüche 1 bis 3,
dadurch gekennzeichnet,
daß die Nabe ( 4 ) werkstoffmäßig zumindest teilweise aus einem elastischen Kunststoff gebildet ist.

5. Laufrad nach Anspruch 4,
dadurch gekennzeichnet,
daß der Kunststoff im Spritsgußverfahren gießbar ist.

6. Laufrad nach einem der Ansprüche 1 bis 3,
dadurch gekennzeichnet
daß die Nabe ( 4 ) werkstoffmäßig zumindest teilweise aus einer elastischen Leichtmetallegierung gebildet ist.

7. Laufrad nach einem der Ansprüche 4 oder 5,
dadurch gekennzeichnet,
daß der äußere Randbereich der Nabe ( 4 ) aus dem Kunststoff gebildet ist.

8. Laufrad nach Anspruch 7,
dadurch gekennzeichnet,
daß der äußere Randbereich der Nabe ( 4 ) zumindest ein Drittel des Nabendurchmessers umfaßt.

9. Laufrad nach einem der Ansprüche 1 bis 8,
dadurch gekennzeichnet,
daß die Öffnung des Laufrings ( 2 ) ein gleichseitiges spärisches Dreieck als Querschnitt aufweist, in die die mit einem Wellenschaft mit korrespondierendem Querschnitt ausgebildete Nabe ( 4 ) spielfrei einführbar ist.

10. Laufrad nach einem der Ansprüche 1 bis 9,
dadurch gekennzeichnet,
daß in der Nabe ( 4 ) eine zentrisch angeordnete Durchgangsöffnung ( 6 ) vorgesehen ist, in die ein korrespondierend geformter Wellenstumpf der Antriebswelle form- und/oder kraftschlüssig spielfrei einpaßbar ist.

11. Laufrad nach Anspruch 10,
dadurch gekennzeichnet,
daß die Durchgangsöffnung ( 6 ) ein gleichseitiges spärisches Dreieck oder eine Vielkeilverzahnung als Querschnitt aufweist.

12. Laufrad nach einem der Ansprüche 1 bis 11,
dadurch gekennzeichnet,
daß der Laufring ( 2 ) aus verschleißfestem Gußeisen oder aus Stahl hergestellt ist.

13. Laufrad nach einem der Ansprüche 10 oder 11,
dadurch gekennzeichnet,
daß der Randbereich der Durchgangsöffnung ( 6 ) aus einem in die Nabe (4) eingesetzten Metallring ( 7 ) gebildet ist.

14. Laufrad nach einem der Ansprüche 1 bis 13,
dadurch gekennzeichnet,
daß der Laufring ( 2 ) außen beidseitig mit jeweils drei in jeweils gleichem Winkelabstand zueinander angeordneten Ausnehmungen 9 versehen ist.

## Claims

1. A running wheel for travelling units movable on rails, in particular for travelling cranes, comprising an outer running ring, in the central opening of which there is inserted a hub (4) for transmitting the torque of a drive shaft,
characterised in that
a play-free, torque-transmitting connection is formed between a wear-resistant running ring (2) and a resilient shock-absorbing hub (4).

2. A running wheel according to claim 1,
characterised in that
the hub (4) is so constructed from the point of view of material that, under the action of torque, the running ring (2) and the drive shaft may be rotated relative to one another in the manner of a torsion bar within a defined angular range.

3. A running wheel according to claim 1,
characterised in that
the connection in the running ring (2) and in the hub (4) is of the form-fitting and/or frictional type.

4. A running wheel according to any one of claims 1 to 3,
characterised in that,
from the point of view of material, the hub (4) is formed at least partially of a resilient plastics material.

5. A running wheel according to claim 4,
characterised in that
the plastics material may be moulded by the injection moulding process.

6. A running wheel according to any one of claims 1 to 3,
characterised in that,
from the point of view of material, the hub (4) is formed at least partially from a resilient light metal alloy.

7. A running wheel according to either one of claims 4 or 5,
characterised in that
the outer edge area of the hub (4) is formed of plastics material.

8. A running wheel according to claim 7,
characterised in that
the outer edge area of the hub (4) encompasses at least a third of the hub diameter.

9. A running wheel according to any one of claims 1 to 8,
characterised in that
the opening in the running ring (2) exhibits a cross section in the form of an equilateral spherical triangle, into which the hub (4), which comprises a shaft shank of corresponding cross section, may be inserted in play-free manner.

10. A running wheel according to any one of claims 1 to 9,
characterised in that
a centrally arranged through-hole (6) is provided in the hub, into which through-hole (6) a correspondingly shaped shaft stub of the drive shaft may be fitted form-fittingly and/or frictionally in play-free manner.

11. A running wheel according to claim 10,
characterised in that
the through-hole (6) exhibits a cross section in the form of an equilateral spherical triangle or comprising multiple splining.

12. A running wheel according to any one of claims 1 to 11,
characterised in that
the running ring (2) is made of wear-resistant cast iron or steel.

13. A running wheel according to either one of claims 10 or 11,
characterised in that
the edge area of the through-hole (6) takes the form of a metal ring (7) inserted into the hub (4).

14. A running wheel according to any one of claims 1 to 13,
characterised in that
the running ring (2) is provided externally on both sides with three recesses (9) arranged respectively at the same angular distance from each other.

## Revendications

1. Roue de roulement pour des unités d'entraînement mobiles sur des rails, en particulier des ponts-roulants, comportant une bague de roulement externe, dans l'ouverture centrale de laquelle est prévu un moyeu (4) pour transférer le couple d'un arbre d'entraînement,
caractérisée en ce qu'une liaison sans jeu transférant le couple est formée entre une bague de roulement (2) résistant à l'usure et un moyeu (4) d'amortissement élastique.

2. Roue de roulement selon la revendication 1,
caractérisée en ce que le moyeu (4), du point de vue matériau, est réalisé de sorte que la bague de roulement (2) et l'arbre d'entraînement peuvent tourner relativement l'un par rapport à l'autre, à la manière d'une barre de torsion, dans une plage angulaire limitée, sous l'effet du couple.

3. Roue de roulement selon la revendication 1,
caractérisée en ce que la liaison dans la bague de roulement (2) et dans le moyeu (4) est réalisée par coopération de formes et/ou sous l'influence d'une force.

4. Roue de roulement selon une des revendications 1 à 3,
caractérisée en ce que le moyeu (4), du point de vue matériau, est formé au moins partiellement en une matière synthétique élastique.

5. Roue de roulement selon la revendication 4,
caractérisée en ce que la matière synthétique peut être coulée suivant le procédé de coulée par injection.

6. Roue de roulement selon une des revendications 1 à 3,
caractérisée en ce que le moyeu (4), du point de vue matériau, est formé au moins partiellement en un alliage élastique de métal léger.

7. Roue de roulement selon une des revendications 4 ou 5,
caractérisée en ce que la zone marginale externe du moyeu (4) est formée à partir de la matière synthétique.

8. Roue de roulement selon la revendication 7,
caractérisée en ce que la zone marginale externe du moyeu (4) constitue au moins un tiers du diamètre du moyeu.

9. Roue de roulement selon une des revendications 1 à 8,
caractérisée en ce que l'ouverture de la bague de roulement (2) présente comme section transversale un triangle équilatéral sphérique, dans lequel le moyeu (4) réalisé en ayant un arbre de section transversale correspondante peut être introduit sans jeu.

10. Roue de roulement selon une des revendications 1 à 9,
caractérisée en ce que, dans le moyeu (4), il est prévu une ouverture de passage agencée de façon centrale (6) dans laquelle un bout formé de façon correspondante de l'arbre d'entraînement peut être adapté sans jeu par coopération de formes et/ou sous l'influence d'une force.

11. Roue de roulement selon la revendication 10,
caractérisée en ce que l'ouverture de passage (6) présente comme section transversale un triangle équilatéral sphérique ou une denture à cannelures multiples.

12. Roue de roulement selon une des revendications 1 à 11,
caractérisée en ce que la bague de roulement (2) est fabriquée en fonte résistant à l'usure ou en acier.

13. Roue de roulement selon une des revendications 10 ou 11,
caractérisée en ce que la zone marginale de l'ouverture de passage (6) est formée par une bague métallique (7) montée dans le moyeu (4).

14. Roue de roulement selon une des revendications 1 à 13,
caractérisée en ce que la bague de roulement (9) est munie, extérieurement, des deux côtés, d'à chaque fois trois évidements (9) agencés l'un par rapport à l'autre à un même écartement angulaire.
